# FASCICULE DE BREVET EUROPEEN

(11) **EP 3 394 144 B1**
(45) Date de publication et mention de la délivrance du brevet: **26.04.2023**
(21) Numéro de dépôt: 16826411.7
(22) Date de dépôt: 20.12.2016
(51) Int. Cl.: C08G 18/76, C08G 18/12, C08G 18/48, C08L 75/08, C08G 18/10, C08G 18/30

(54) **MASTICS POLYURETHANE SUPERELASTIQUES**
SUPERELASTISCHE POLYURETHANKITTE
SUPERELASTIC POLYURETHANE MASTICS

(30) Priorité: 21.12.2015 FR 1563001
(43) Date de publication de la demande: 31.10.2018
(73) Titulaire: BOSTIK SA, 92700 Colombes (FR)
(72) Inventeur: SANZ, Federico, 60750 Choisy au Bac (FR); OPILLARD, André, 60400 Noyon (FR)
(74) Mandataire: Arkema Patent
(86) Numéro de dépôt international: PCT/FR2016/053575
(87) Numéro de publication internationale: WO 2017/109383

(56) Documents cités:
- EP-A1- 2 949 676
- EP-A2- 0 150 444
- WO-A1-2005/097861
- DE-A1- 19 731 680

## Description

### DOMAINE DE L'INVENTION

La présente invention concerne un procédé de fabrication de polyuréthanes à terminaisons NCO à base de MDI présentant des propriétés élastiques améliorées, en particulier un allongement à la rupture plus élevé ainsi qu'une amélioration de la récupération élastique. L'invention concerne enfin des compositions adhésives, de mastic et/ou de revêtement de surface comprenant le polyuréthane à terminaisons NCO susceptible d'être obtenu selon le procédé selon l'invention.

### ARRIERE-PLAN TECHNOLOGIQUE

Pour répondre au besoin du plus grand nombre, on cherche à mettre au point des compositions de mastic utilisables ou applicables à basse température (entre 5 et 35°C) et notamment à température ambiante (23°C).

De nombreuses compositions de mastic disponibles sur le marché sont fabriquées à partir de polyuréthanes réactifs à base de MDI (diisocyanate de diphényl-méthylène), possédant notamment des groupes isocyanates (NCO) terminaux qui réticulent en présence d'humidité.

La préparation de polyuréthanes à terminaisons NCO à base de MDI se fait traditionnellement par réaction d'un polyol avec un excès stoechiométrique de MDI. Cet excès stoechiométrique peut être traduit par un rapport molaire NCO/OH (noté « rapport NCO/OH ») strictement supérieur à 1, qui correspond au rapport molaire du nombre de groupes isocyanates (NCO) sur le nombre de groupes hydroxyles (OH) portés par les espèces réactives porteuses de telles fonctions, utilisées dans la préparation du polyuréthane. Ledit excès stoechiométrique est nécessaire à l'obtention de groupes isocyanates terminaux sur le polyuréthane. Ce type de procédé permet l'obtention de polyuréthane à terminaisons NCO présentant un allongement à la rupture inférieur à 1000%, ce qui peut s'avérer insuffisant pour certaines applications.

EP0150444A2 divulgue un procédé de production de prépolymères de polyuréthane dans lequel des alcools polyfonctionnels sont d'abord mis à réagir avec le groupe isocyanate à réaction plus rapide d'un diisocyanate asymétrique tout en conservant le groupe à réaction lente, pour former un prépolymère ayant à la fois des fonctions NCO libres et des fonctions OH libres, et les produits de réaction sont ensuite combinés avec un diisocyanate symétrique dont les groupes isocyanate de même réactivité réagissent à leur tour plus rapidement que les groupes à réaction lente de l'ancien composé isocyanate multifonctionnel.

DE19731680A1 divulgue la préparation de prépolymères avec des groupes isocyanates terminaux qui comprend : (i) la préparation d'un prépolymère contenant un hydroxyle (OH) en faisant réagir un ou des composés contenant OH avec un ou des composés contenant NCO, puis (ii) la réaction d'une solution du ou des prépolymère(s) avec un ou des polyisocyanate(s).

Ainsi, il existe un besoin de mettre à disposition un prépolymère polyuréthane à terminaisons NCO présentant un meilleur allongement à la rupture, en particulier un allongement à la rupture supérieur ou égal à 1000%, tout en maintenant ses autres caractéristiques, telles que la viscosité, le module de rupture ou le module 100%, à des niveaux acceptables.

### RESUME DE L'INVENTION

La présente invention est telle que décrite dans les revendications 1 à 10.

Un premier objet de la présente invention concerne un procédé de préparation de polyuréthanes à terminaisons NCO selon la revendication 1.

Selon un mode de réalisation de l'invention, la composition de diisocyanate(s) utilisée à l'étape a) comprend au moins 85% en poids, de préférence au moins 90% en poids, de préférence encore au moins 95% en poids, encore plus préférentiellement au moins 98% en poids, d'un même diisocyanate, par rapport au poids total de la composition de diisocyanate(s) utilisée à l'étape a).

Selon un mode de réalisation de l'invention, la composition de diisocyanate(s) utilisée lors de l'étape a) comprend au moins un diisocyanate choisi parmi le diisocyanate de diphénylméthylène (MDI), l'isophorone diisocyanate (IPDI), le diisocyanate de toluène (TDI), le xylylène diisocyanate (XDI), le dibenzyl diisocyanate (DBDI), le diisocyanate d'hexaméthylène (HDI) ou un allophanate dérivé du diisocyanate d'hexaméthylène.

Selon un mode de réalisation de l'invention, la composition de diisocyanate de diphénylméthylène utilisée à l'étape b) comprend au moins 85% en poids, de préférence encore au moins 90% en poids, avantageusement au moins 95% en poids, encore plus avantageusement au moins 98% en poids d'un même composé diisocyanate de diphénylméthylène, par rapport au poids total de la composition de diisocyanate de diphénylméthylène.

Selon un mode de réalisation de l'invention, la composition diisocyanate de diphénylméthylène utilisée à l'étape b) comprend au moins 80% en poids, de préférence au moins 85% en poids, de préférence encore au moins 90% en poids, avantageusement au moins 95% en poids, encore plus avantageusement au moins 98% en poids de 4,4'-diisocyanate de diphénylméthylène, par rapport au poids total de la composition de diisocyanate de diphénylméthylène.

Selon un mode de réalisation de l'invention, la composition de polyol est constituée d'un mélange de polyéther diol et de polyéther triol.

Selon un mode de réalisation de l'invention, le ratio molaire NCO/OH lors de l'étape b) est supérieur ou égal à 1,2, de préférence encore supérieur ou égal à 1,5, avantageusement supérieur ou égal à 1,7.

Selon un mode de réalisation de l'invention, les polyuréthanes à terminaisons NCO présentent un allongement à la rupture supérieur ou égal à 1000%.

La présente description, ne faisant pas partie de l'invention, concerne également un polyuréthane à terminaisons NCO à base de diisocyanate de diphénylméthylène, susceptible d'être obtenu selon le procédé tel que défini dans la présente invention, ledit polyuréthane étant non solide à une température allant de 5 à 35°C et présentant un allongement à la rupture supérieur ou égal à 1000%.

La présente invention concerne également une composition selon la revendication 7.

Selon un mode de réalisation de l'invention, la composition comprend :
- de 10 à 40% en poids, de préférence de 15 à 30% en poids de polyuréthane,
- de 20 à 70% en poids, de préférence de 25 à 60% en poids d'au moins une charge,
- de 0,01 à 1% en poids d'au moins un catalyseur de réticulation,
les pourcentages en poids étant exprimés par rapport au poids total de la composition.

L'invention concerne enfin un article comprenant la composition selon l'invention dans un conditionnement hermétique, à l'abri de l'air.

De manière surprenante, les inventeurs ont découvert que l'introduction séquencée (en 2 étapes) des diisocyanates permettait la fabrication de polyuréthane à terminaisons NCO présentant de meilleures propriétés élastiques, en particulier un allongement à la rupture plus élevé, encore jamais atteint par les procédés existants.

Ainsi, la présente invention permet de fournir des polyuréthanes à terminaisons NCO présentant de meilleures propriétés élastiques.

La présente invention permet de fournir des compositions adhésives, de mastic et/ou de revêtement de surface présentant de meilleures propriétés élastiques. De meilleures propriétés élastiques permettent à la composition adhésive, de mastic et/ou de revêtement de surface, d'être plus résistante, notamment aux variations de température.

A propriétés élastiques équivalentes recherchées, l'invention permet également d'utiliser des teneurs moindres en polyuréthane par rapport aux mastics existants.

La composition selon l'invention, en particulier la composition de mastic selon l'invention, peut donc être utilisée pour des applications diverses, nécessitant d'excellentes performances, telles que la construction ou le transport, notamment le transport aérien, où la composition, telle que la composition de mastic, doit pouvoir supporter et résister à de fortes variations de température.

### EXPOSE DETAILLE DES MODES DE REALISATION DE L'INVENTION

Dans la présente demande, en l'absence d'indication contraire :
- la viscosité est mesurée à température ambiante (23°C). La mesure de viscosité à 23°C peut se faire à l'aide d'un viscosimètre Brookfield selon la norme ISO 2555. Typiquement, la mesure réalisée à 23°C peut se faire à l'aide d'un viscosimètre Brookfield RVT, d'une aiguille adaptée au domaine de viscosité et à une vitesse de rotation de 20 tours par minute (tr/mn) ;
- les différents modes de réalisations décrits dans la présente demande peuvent être combinés entre eux.

La présente invention concerne en premier lieu un procédé de fabrication de polyuréthanes à terminaisons NCO selon la revendication 1.

Le polyuréthane à terminaisons NCO obtenu selon l'invention est non thermofusible, c'est-à-dire qu'il n'est pas solide à une température allant de 5 à 35°C, et notamment à température ambiante (23°C). En particulier, il présente une viscosité mesurée à 23°C, inférieure ou égale à 300000 mPa.s, de préférence inférieure ou égale à 250000 mPa.s, plus préférentiellement allant de 100 à 200000 mPa.s., et mieux encore allant de 4000 à 150000 mPa.s (millipascal seconde). De tels polyuréthanes sont suffisamment fluides à une température allant de 5 à 35°C pour pouvoir être mis en oeuvre aisément dans cette gamme de température à l'aide de dispositifs d'application et/ou de mélange habituellement employés dans le domaine des mastics, tel qu'illustré notamment dans les exemples de la présente demande.

La composition de diisocyanate(s) utilisée lors de l'étape a) comprend au moins 80% en poids, de préférence au moins 85% en poids, de préférence encore au moins 90% en poids, avantageusement au moins 95% en poids, voire au moins 98% en poids d'une même espèce diisocyanate, par rapport au poids total de la composition de diisocyanate(s). Autrement dit, la composition de diisocyanate(s) utilisée lors de l'étape a) comprend de façon prépondérante un même diisocyanate (« diisocyanate prépondérant »), qui peut être utilisé seul, ou en mélange avec un ou plusieurs autres diisocyanates distinctes de celui-ci. Au sens de la présente invention, les isomères d'un diisocyanate donné sont considérés comme des espèces distinctes.

La composition de diisocyanate(s) utilisée lors de l'étape a) comprend au moins 80% en poids d'un diisocyanate choisi parmi le 4,4'-diisocyanate de diphénylméthylène (4,4'-MDI), l'IPDI, le diisocyanate de toluène (2,4-TDI), le méta-xylylène diisocyanate (m-XDI), l'allophanate dérivé du diisocyanate d'hexaméthylène de formule (I) ci-dessous : 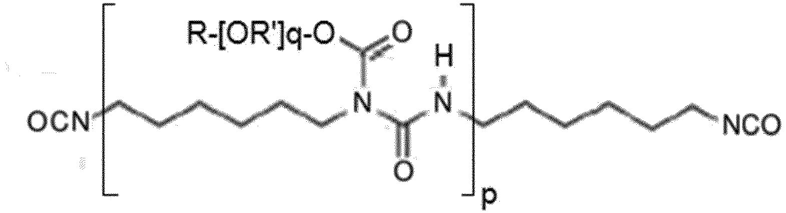 dans laquelle :
- p est un nombre entier allant de 1 à 2 ;
- q est un nombre entier allant de 0 à 9, et de préférence de 2 à 5 ;
- R représente une chaîne hydrocarbonée, saturée ou insaturée, cyclique ou acyclique, linéaire ou ramifiée, comprenant de 1 à 20 atomes de carbone, de préférence de 6 à 14 atomes de carbone ;
- R' représente un groupe divalent alkylène ayant de 2 à 4 atomes de carbone ; et de préférence, un groupe divalent propylène.

Parmi les composés de formule (I), on peut citer le Tolonate^{®} X FLO 100 disponible auprès de VENCOREX.

Selon un mode de réalisation de l'invention, la composition de diisocyanate(s) utilisée lors de l'étape a) est telle que toutes les fonctions NCO réagissent avec les fonctions OH des polyols de la composition de polyol utilisée lors de l'étape a). De préférence, les diisocyanates de la composition de diisocyanate(s) utilisée lors de l'étape a) présentent des fonctions NCO ayant des réactivités similaires, voire des réactivités identiques. A titre d'illustration, un diisocyanate « symétrique » (ou présentant un plan de symétrie ou un point de symétrie) présente des fonctions NCO ayant des réactivités identiques.

Selon un mode de réalisation de l'invention, la composition de diisocyanate(s) utilisée lors de l'étape a) comprend au moins un diisocyanate choisi parmi le diisocyanate de diphénylméthylène (MDI), l'isophorone diisocyanate (IPDI), le xylylène diisocyanate (XDI), le dibenzyl diisocyanate (DBDI), le diisocyanate d'hexaméthylène (HDI) ou un allophanate dérivé du diisocyanate d'hexaméthylène.

La composition de diisocyanate(s) utilisée lors de l'étape a) comprend au moins 80% en poids d'un diisocyanate choisi parmi le 4,4'-diisocyanate de diphénylméthylène (4,4'-MDI), l'IPDI, le méta-xylylène diisocyanate (m-XDI), l'allophanate dérivé du diisocyanate d'hexaméthylène de formule (I) ci-dessus.

La composition de polyol(s) utilisée lors de l'étape a) du procédé selon l'invention peut être constituée d'un polyol ou d'un mélange de polyols. En particulier, le(s) polyol(s) utilisable(s) peu(ven)t être choisi(s) parmi ceux possédant une masse molaire moyenne en nombre allant de 1000 à 18000 g/mol, et plus particulièrement ceux possédant une masse molaire moyenne en nombre allant de 1000 à 8000 g/mol.

La composition de polyol(s) peut être constituée d'un ou plusieurs polyéthers et/ou d'un ou plusieurs polyesters amorphes, de préférence d'un ou plusieurs polyéthers amorphes.

Selon un mode de réalisation de l'invention, la composition de polyol(s) comprend au moins un triol, et plus préférentiellement au moins un polyéther triol.

Mieux encore, la composition de polyol(s) est un mélange de polyéther diol et triol, tel que le polypropylène glycol triol et le polypropylène glycol diol.

Lors de l'étape a) du procédé selon l'invention, le rapport molaire NCO/OH est inférieur ou égal à 0,8 afin d'obtenir un précurseur polyuréthane à terminaisons OH. De préférence, le rapport molaire NCO/OH lors de l'étape a) est inférieur ou égal à 0,7 ou encore inférieur ou égal à 0,6.

Le polyuréthane à terminaisons OH obtenu à l'issue de l'étape a) ne comprend plus de fonctions NCO terminales.

L'étape b) consiste à faire réagir le polyuréthane précurseur à terminaisons OH obtenu à l'issue de l'étape a) avec une composition de diisocyanate de diphénylméthylène (MDI), de préférence avec une composition de 4,4'-diisocyanate de diphénylméthylène (4,4'-MDI). Lors de l'étape b) du procédé selon l'invention, le rapport molaire NCO/OH est strictement supérieur à 1 afin d'obtenir un polyuréthane à terminaisons NCO. De préférence, le rapport molaire NCO/OH lors de l'étape b) est supérieur ou égal à 1,2, de préférence encore supérieur ou égal à 1,5, avantageusement supérieur ou égal à 1,7. En particulier, le polyuréthane à terminaisons NCO obtenu à l'issue de l'étape b) ne comprend plus de fonctions OH terminales.

Ainsi, le polyuréthane à terminaisons NCO obtenu à l'issue du procédé selon l'invention présente en bout de chaîne des terminaisons NCO provenant de la réaction entre les fonctions OH du polyuréthane précurseur et les fonctions NCO du diisocyanate de diphénylméthylène.

La composition de MDI utilisée lors de l'étape b) comprend au moins 80% en poids, de préférence au moins 85% en poids, de préférence encore au moins 90% en poids, avantageusement au moins 95% en poids, encore plus avantageusement au moins 98% en poids d'un même composé MDI, par rapport au poids total de la composition de MDI. En effet, le MDI peut se présenter sous différents isomères, parmi lesquels on peut citer le 4,4'-MDI, le 2,4'-MDI ou encore le 2,2'-MDI.

De préférence, la composition de MDI utilisée lors de l'étape b) comprend au moins 80% en poids, de préférence au moins 85% en poids, de préférence encore au moins 90% en poids, avantageusement au moins 95% en poids, encore plus avantageusement au moins 98% en poids de 4,4'-MDI, par rapport au poids total de la composition de MDI

Les étapes a) et b) du procédé selon l'invention sont mises en oeuvre dans des conditions anhydres, par exemple sous atmosphère d'azote.

De préférence, la température lors des étapes a) et b) du procédé selon l'invention est inférieure ou égale à 95°C, de préférence encore va de 75 à 80°C.

De préférence, les étapes a) et b) du procédé selon l'invention sont mises en oeuvre à pression atmosphérique.

Le(s) catalyseur(s) de réaction utilisable(s) peu(ven)t être tout catalyseur connu par l'homme du métier pour catalyser la formation de polyuréthane par réaction d'au moins un polyisocyanate et d'au moins un polyol. Le catalyseur de réaction est de préférence ajouté au milieu réactionnel lors de l'étape a), étant entendu qu'il sera présent dans le milieu réactionnel lors de l'étape b) s'il n'est pas éliminé du milieu.

La présente description, ne faisant pas partie de l'invention, concerne un polyuréthane à terminaisons NCO à base de diisocyanate de diphénylméthylène (MDI) susceptible d'être obtenu par le procédé selon l'invention, ledit polyuréthane étant non solide à une température allant de 5 à 35°C et présentant un allongement à la rupture supérieur ou égal à 1000%.

Dans la présente invention et dans la présente description, l'allongement à la rupture est mesuré selon la norme NF ISO 37 (Mars 2012), en utilisant des éprouvettes de type « haltère ».

De préférence, l'allongement à la rupture du polyuréthane à terminaisons NCO selon la description est supérieur ou égal à 1100%, de préférence supérieur ou égal à 1200%. L'allongement à la rupture du polyuréthane à terminaisons NCO selon l'invention peut par exemple aller de 1200 à 1800%.

Le polyuréthane à terminaisons NCO à base de MDI selon la description présente par exemple en bout de chaîne les groupements suivants : 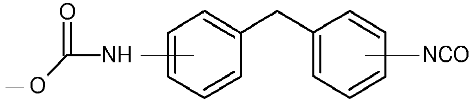 dans lesquels les substituants des noyaux aromatiques peuvent se trouver à différentes positions, selon la nature du MDI utilisé lors de la seconde étape du procédé (étape b).

Par exemple, le polyuréthane à terminaisons NCO à base de MDI obtenu à partir d'une composition de MDI constituée de 4,4'-MDI présente en bout de chaîne les groupements suivants :

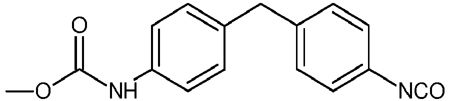

Le polyuréthane selon la description peut se présenter sous la forme d'une composition de polyuréthane(s), pouvant éventuellement contenir un mélange de plusieurs polyuréthanes.

La description, ne faisant pas partie de l'invention, concerne également un polyuréthane à terminaisons NCO à base de diisocyanate de diphénylméthylène, obtenu par le procédé tel que défini dans la présente invention, ledit polyuréthane étant non solide à une température allant de 5 à 35°C.

Le polyuréthane selon la description ou la composition de polyuréthanes selon la description tels que décrits ci-dessus, peuvent être utilisés pour fabriquer une composition adhésive, de mastic et/ou de revêtement de surface, notamment pour le domaine de la construction.

La présente invention concerne également une composition, utilisable en tant que composition adhésive, de mastic et/ou de revêtement de surface, comprenant :
- au moins un polyuréthane à terminaisons NCO à base de MDI susceptible d'être obtenu selon le procédé selon l'invention,
- au moins une charge choisie parmi l'argile, le quartz, les charges carbonatées,
- au moins un catalyseur de réticulation.

Selon un mode de réalisation de l'invention, la composition adhésive, de mastic et/ou de revêtement de surface présente un allongement à la rupture supérieur ou égal à 1000%, de préférence supérieur ou égal à 1100%, de préférence encore supérieur ou égal à 1200%. L'allongement à la rupture de la composition adhésive, de mastic et/ou de revêtement de surface selon l'invention peut par exemple aller de 1200% à 1800%.

Selon un mode de réalisation de l'invention, la composition adhésive, de mastic et/ou de revêtement de surface comprend :
- de 10 à 40% en poids, de préférence de 15 à 30% en poids, de préférence encore de 20 à 30% en poids, d'au moins un polyuréthane susceptible d'être obtenu selon le procédé selon l'invention tel que décrit dans l'un quelconque des paragraphes précédents,
- de 20 à 70% en poids, de préférence de 25 à 60% en poids, de préférence encore de 25 à 40% en poids, d'au moins une charge,
- de 0,01 à 1% en poids, de préférence de 0,05 à 0,5% en poids, d'au moins un catalyseur de réticulation,
les pourcentages en poids étant exprimés par rapport au poids total de la composition adhésive, de mastic et/ou de revêtement de surface.

Selon un mode de réalisation particulier, la composition adhésive, de mastic et/ou de revêtement de surface selon l'invention peut comprendre:
- de 10 à 40% en poids, de préférence de 15 à 30% en poids, de préférence encore de 20 à 30% en poids, d'au moins un polyuréthane à terminaisons NCO susceptible d'être obtenu selon le procédé selon l'invention,
- de 20 à 70% en poids, de préférence de 25 à 60% en poids, de préférence encore de 25 à 40% en poids, d'au moins une charge,
- de 0,01 à 1% en poids, de préférence de 0,05 à 0,5% en poids, d'au moins un catalyseur de réticulation,
- de 1 à 40% en poids, de préférence de 5 à 30% en poids, de préférence encore de 10 à 25% en poids, d'au moins un agent rhéologique,
les pourcentages en poids étant exprimés par rapport au poids total de la composition adhésive, de mastic et/ou de revêtement de surface.

A titre de catalyseur(s) de réticulation utilisable(s) dans la composition adhésive, de mastic et/ou de revêtement de surface selon l'invention, on peut utiliser n'importe quel catalyseur(s) connu(s) par l'homme du métier pour catalyser la réticulation du polyuréthane à terminaisons NCO en présence d'eau (ou d'humidité). L'eau ou l'humidité peut être apportée par la surface du support ou le milieu environnant, de manière naturelle (humidité atmosphérique) ou contrôlée (par exemple, dans une chambre thermostatée à une humidité relative entre 40 et 70% à 23°C, ou un four allant jusqu'à 150°C) au contact de la composition selon l'invention. Cette réticulation se traduit par la création, entre les chaînes polymériques du polyuréthane, de liaisons de type urée qui conduisent à la formation d'un réseau polymérique tridimensionnel.

On peut utiliser par exemple un ou plusieurs catalyseurs de réticulation choisis parmi le dilaurate de dioctyl d'étain (DOTL), les catalyseurs à base de bismuth, ou encore les catalyseurs aminés tertiaires tels que :
- le 1,8-diazabicyclo[5.4.0]undec-7-ène (DBU) : 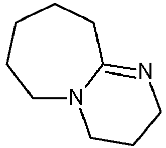
- le 1,5-diazabicyclo[4.3.0]non-5-ène (DBN) : 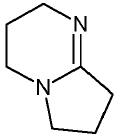
- l'éther diéthylique-2,2'-morpholine (DMDEE) : 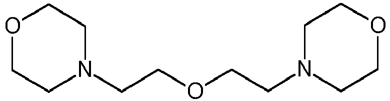
- le 1,4-diazabicyclo[2.2.2]octane (DABCO) :

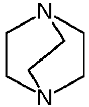

Ces catalyseurs de réticulation présentent l'avantage de ne pas être cancérogènes, mutagènes et reprotoxiques (CMR).

De préférence, la quantité de catalyseur de réticulation utilisable va de 0,01 à 1% en poids, de préférence encore de 0,05 à 0,5% en poids par rapport au poids de la composition adhésive, de mastic et/ou de revêtement de surface selon l'invention.

La (ou les) charge(s) utilisable(s) dans la composition adhésive, de mastic et/ou de revêtement de surface selon l'invention peu(ven)t être choisie(s) parmi les charges minérales et les mélanges de charges organiques et de charges minérales.

A titre d'exemple de charge(s) minérale(s) utilisable(s), on peut utiliser n'importe quelle(s) charge(s) minérale(s) habituellement utilisée(s) dans le domaine des compositions adhésive, de mastic et/ou de revêtement de surface. Ces charges se présentent sous la forme de particules de géométrie diverse. Elles peuvent être par exemples sphériques, fibreuses, ou présenter une forme irrégulière.

On utilise au moins une charge choisie parmi l'argile, le quartz, les charges carbonatées.

Plus préférentiellement, on utilise des charges carbonatées, telles que les carbonates de métaux alcalin ou alcalino-terreux, et plus préférentiellement le carbonate de calcium.

Ces charges peuvent être naturelles ou traitées, par exemple à l'aide d'un acide organique tel que l'acide stéarique, ou d'un mélange d'acides organiques constitué majoritairement d'acide stéarique.

On peut utiliser également des microsphères creuses minérales telles que des microsphères creuses de verre, et plus particulièrement celles en borosilicate de sodium et de calcium ou en aluminosilicate.

La quantité de charge minérale pouvant être utilisée peut notamment varier de 20 à 70% en poids, de préférence de 25 à 60% en poids, et plus préférentiellement de 25 à 40% en poids du poids de la composition adhésive, de mastic et/ou de revêtement de surface selon l'invention.

A titre d'exemple de charge(s) organique(s) utilisable(s), on peut utiliser n'importe quelle(s) charge(s) organique(s) et notamment polymérique(s) habituellement utilisée(s) dans le domaine des compositions adhésives, de mastic et/ou de revêtement de surface.

On peut utiliser par exemple du polychlorure de vinyle (PVC), des polyoléfines, du caoutchouc, de l'éthylène vinyl acétate (EVA), des fibres aramides telles que le Kevlar^{®}.

On peut utiliser également des microsphères creuses en polymère thermoplastique expansibles ou non expansibles. On peut notamment citer des microsphères creuses en chlorure de vinylidène/acrylonitrile.

De préférence, on utilise du PVC.

La taille moyenne de particule de la (des) charge(s) utilisable(s) est de préférence inférieure ou égale à 10 microns, plus préférentiellement inférieure ou égale à 3 microns, afin d'éviter leur sédimentation dans la composition adhésive, de mastic et/ou de revêtement de surface selon l'invention au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

La composition de mastic selon l'invention peut comprendre au moins un agent plastifiant à raison de 5 à 20% en poids, de préférence de 10 à 15% en poids du poids de la composition adhésive, de mastic et/ou de revêtement de surface selon l'invention.

A titre d'exemple d'agent plastifiant utilisable, on peut utiliser n'importe quel agent plastifiant habituellement utilisé dans le domaine des compositions adhésives, de mastic et/ou de revêtement de surface.

De préférence, on utilise :
- le diisodecyl phtalate (DIDP)
- un ester d'acide alkylsulphonique et de phénol, tel que commercialisé sous le nom Mesamoll^{®} par la société Lanxess
- le diisononyl-1,2-cyclohexanedicarboxylate, tel que commercialisé sous le nom Hexamoll Dinch^{®} par la société BASF.

La composition adhésive, de mastic et/ou de revêtement de surface selon l'invention peut comprendre au moins un agent de rhéologie.

A titre d'exemple d'agent(s) de rhéologie utilisable(s), on peut citer n'importe quel agent de rhéologie habituellement utilisé dans le domaine des compositions adhésives, de mastic et/ou de revêtement de surface.

De préférence, on utilise un ou plusieurs agents de rhéologie choisis parmi les agents thixotropiques, et plus préférentiellement parmi:
- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyuréthane Sealants », Robert M. Evans, ISBN 087762-998-6,
- la silice pyrogénée,
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172.

La teneur totale en agent(s) de rhéologie(s) pouvant être utilisée peut varier de 1 à 40% en poids, de préférence de 5 à 30 % en poids, plus préférentiellement de 10 à 25% en poids du poids de la composition adhésive, de mastic et/ou de revêtement de surface selon l'invention.

La composition selon l'invention peut comprendre au moins un adjuvant choisi parmi les promoteurs d'adhérence tels que les époxysilanes, les stabilisants UV (ou antioxydants), les pigments, les colorants, et leur mélange. Lorsque ces adjuvants sont présents dans la composition, la somme totale de leur teneur est de préférence inférieure ou égale à 15% en poids par rapport au poids total de la composition adhésive, de mastic et/ou de revêtement de surface selon l'invention.

La composition selon l'invention comprend de préférence :
- de 10 à 40% en poids, de préférence de 15 à 30% en poids d'au moins un polyuréthane à terminaisons NCO susceptible d'être obtenu selon le procédé selon l'invention tel que décrit dans l'un quelconque des paragraphes précédents,
- de 10 à 35% en poids, de préférence de 15 à 30% en poids, d'au moins une charge carbonatée,
- de 10 à 35% en poids, de préférence de 15 à 30% en poids, d'au moins une charge organique et/ou au moins un agent de rhéologie,
- de 0,01 à 1% en poids d'au moins un catalyseur de réticulation,
les pourcentages en poids étant exprimés par rapport au poids de la composition adhésive, de mastic et/ou de revêtement de surface.

La composition selon l'invention est de préférence une composition de mastic.

Les compositions adhésives, de mastic et/ou de revêtement de surface selon l'invention sont formulées de manière à être utilisables ou applicables à basse température (entre 5 et 35°C) et notamment à température ambiante (23°C).

La présente invention a pour objet un procédé de préparation d'une composition adhésive, de mastic et/ou de revêtement de surface selon l'invention, ledit procédé de préparation comprenant une étape dans laquelle le(s) ingrédient(s) éventuellement présent(s) dans la composition adhésive, de mastic et/ou de revêtement de surface selon l'invention, est (sont) mélangé(s) à une composition de polyuréthane(s) non thermofusible(s) à terminaisons NCO, à une température inférieure ou égale à 50°C, de préférence allant de 5 à 45°C, et mieux encore allant de 20 à 30°C.

L'ajout et le mélange se font de préférence dans des conditions anhydres.

La composition adhésive, de mastic et/ou de revêtement de surface selon l'invention est de préférence stockée dans un environnement anhydre, par exemple dans un conditionnement hermétique où la composition adhésive, de mastic et/ou de revêtement de surface se trouve à l'abri de l'humidité et de préférence à l'abri de la lumière.

La présente invention a également pour objet un article comprenant la composition adhésive, de mastic et/ou de revêtement de surface selon l'invention dans un conditionnement hermétique, à l'abri de l'air. De préférence, le conditionnement hermétique est un sac d'aluminium ou une cartouche d'aluminium.

La composition adhésive, de mastic et/ou de revêtement de surface peut être utilisée dans un procédé comprenant :
- L'application de ladite composition sur une surface, suivi de
- L'humidification de ladite composition appliquée.

Alternativement, la composition adhésive, de mastic et/ou de revêtement de surface peut être utilisée dans un procédé comprenant :
- L'humidification de la surface, suivi de
- L'application de ladite composition sur ladite surface humidifiée.

La surface peut être une surface de béton ou une surface métallique, telle qu'une surface d'aluminium.

Les exemples suivants sont donnés à titre purement illustratif de l'invention et ne sauraient être interprétés pour en limiter la portée.

### EXEMPLES

### Polyuréthanes comparatifs A et B : procédé en une étape

Les polyuréthanes comparatifs A et B ont été préparés par mélange des ingrédients indiqués dans le tableau 1 à une température inférieure ou égale à 95°C dans des conditions anhydres. Les quantités indiquées dans le tableau 1 sont exprimées en pourcentage en poids par rapport au poids total de la composition de polyuréthane de chacun des exemples.

**Tableau 1 : polyuréthanes comparatifs**

| | A | B |
|---|---|---|
| PPG triol ayant une masse molaire moyenne en nombre de 4000 g/mol | 13,700 | 13,700 |
| PPG diol ayant une masse molaire moyenne en nombre de 2000 g/mol | 68,500 | 68,500 |
| 4,4'-MDI (%NCO = 33,6% en poids) | 17,767 | 17,767 |
| Catalyseur (DOTL) | | 0,003 |
| Catalyseur (Borchi^{®} Kat VP 0244) | 0,003 | |
| xylène | 0,030 | 0,030 |

### Polyuréthanes 1 et 2 : procédé en deux étapes selon l'invention

Les polyuréthanes 1 et 2 selon l'invention ont été préparés par mélange des ingrédients de la première étape (étape a) à une température inférieure ou égale à 95°C dans des conditions anhydres suivi de l'ajout des ingrédients indiqués dans la seconde étape (étape b), également à une température inférieure ou égale à 95°C, comme indiqués dans le tableau 2. Les quantités indiquées dans le tableau 2 sont exprimées en pourcentage en poids par rapport au poids total de la composition de polyuréthane de chacun des exemples.

**Tableau 2 : polyuréthanes 1 et 2 selon l'invention**

| | 1 | 2 |
|---|---|---|
| PPG triol ayant une masse molaire moyenne en nombre de 4000 g/mol - étape a | 13,700 | 13,700 |
| PPG diol ayant une masse molaire moyenne en nombre de 2000 g/mol - étape a | 68,467 | 68,467 |
| 4,4'-MDI (%NCO = 33,6% en poids) - étape a | 5,500 | 5,500 |
| Catalyseur (DOTL) - étape a | | 0,003 |
| Catalyseur (Borchi^{®} Kat VP 0244) - étape a | 0,003 | |
| Xylène - étape a | 0,030 | 0,030 |
| 4,4'-MDI (%NCO = 33,6% en poids) - étape b | 12,300 | 12,300 |

Le Borchi^{®} Kat VP 0244 est un catalyseur à base de carboxylates de zinc et de bismuth, disponible auprès de la société Borchers.

Détermination des propriétés mécaniques des polyuréthanes A, B, 1 et 2 préparés selon les procédés décrits ci-dessus.

La viscosité est mesurée à température ambiante (23°C) à l'aide d'un viscosimètre Brookfield selon la norme ISO 2555.

L'allongement à la rupture a été mesuré selon la norme NF ISO 37 (Mars 2012).

Le module 100% a été mesuré selon la norme ISO 11600 (faisant référence notamment à la norme ISO 8339).

Le module de rupture a été mesuré selon la norme ISO 11600 (faisant référence notamment à la norme ISO 8339).

Les résultats sont indiqués dans le tableau 3 ci-dessous.

**Tableau 3 : caractérisation des polyuréthanes**

| | Polyuréthane A | Polyuréthane 1 | Polyuréthane B | Polyuréthane 2 |
|---|---|---|---|---|
| Allongement à la rupture (%) | 931 | 1754 | 780 | 1000 |
| Module 100% (MPa) | 1020 | 300 | 1200 | 1070 |
| Module de rupture (MPa) | 4580 | 2300 | 4300 | 4400 |
| Viscosité (cP) | 74000 | 130000 | 105000 | 300000 |

Le polyuréthane A et le polyuréthane 1 ont été préparés à partir des mêmes ingrédients mais avec deux procédés différents, le polyuréthane A a été préparé par un procédé en une étape où l'intégralité des diisocyanates (MDI) a été introduite en une seule fois alors que le polyuréthane 1 a été préparé par un procédé en deux étapes où les diisocyanates (MDI) ont été introduits en deux fois (procédé di-séquencé). Le tableau 3 montre que le polyuréthane 1 est différent du polyuréthane A ; en effet, le polyuréthane 1 présente un allongement à la rupture supérieur (1754%) à l'allongement à la rupture du polyuréthane A (931%).

De même ; le polyuréthane B et le polyuréthane 2 ont été préparés à partir des mêmes ingrédients mais avec deux procédés différents, le polyuréthane B a été préparé par un procédé en une étape où l'intégralité des diisocyanates (MDI) a été introduite en une seule fois alors que le polyuréthane 2 a été préparé par un procédé en deux étapes où les diisocyanates (MDI) ont été introduits en deux fois (procédé séquencé). Le tableau 3 montre que le polyuréthane 2 est différent du polyuréthane B ; en effet, le polyuréthane 2 présente un allongement à la rupture supérieur (1000%) à l'allongement à la rupture du polyuréthane B (780%).

Le tableau 3 permet également de démontrer que les polyuréthanes selon l'invention présentent une amélioration de la récupération élastique.

### Préparation de polyuréthanes 3 à 6 selon l'invention

D'autres polyuréthanes selon l'invention ont été préparés. Les polyuréthanes 3 à 6 ont été préparés à partir de différentes compositions de diisocyanates(s) lors de l'étape a) du procédé selon l'invention. Les polyuréthanes 3 à 6 selon l'invention ont été préparés par mélange des ingrédients de la première étape (étape a) à une température inférieure ou égale à 95°C dans des conditions anhydres suivi de l'ajout des ingrédients indiqués dans la seconde étape (étape b), également à une température inférieure ou égale à 95°C, comme indiqués dans le tableau 4. Les quantités indiquées dans le tableau 4 sont exprimées en pourcentage en poids par rapport au poids total de la composition de polyuréthane de chacun des exemples.

L'isophorone diisocyanate (IPDI) utilisé présente un pourcentage de fonctions NCO de l'ordre de 37,6% en poids. Il s'agit du Vestanat^{®} IPDI disponible auprès d'Evonik Industries.

Le diisocyanate de toluène (TDI) utilisé est le Scuranate^{®} T100 disponible auprès de Vencorex Chemicals ; il présente une proportion de 2,4-TDI d'au moins 99% en poids de la composition de TDI et un pourcentage de fonctions NCO de l'ordre de 48,1% en poids.

Le Tolonate^{®} X FLO 100 est disponible auprès de Vencorex Chemicals ; il présente une proportion de fonctions NCO de l'ordre de 12,3% en poids.

Le m-xylylene diisocyanate (m-XDI) utilisé est le Takenate^{®} 500 disponible auprès de Mitsui Chemicals ; il présente une proportion de fonctions NCO de l'ordre de 44,7% en poids.

Le 4,4'-MDI utilisé présente une proportion de fonctions NCO de l'ordre de 33,6% en poids.

### Préparation du polyuréthane comparatif C

Le polyuréthane comparatif C a été préparé par un procédé similaire au procédé utilisé pour fabriquer les polyuréthanes 3 à 6 à l'exception du fait que la composition de polyisocyanate introduite à l'étape a) est constituée d'un mélange de 50% en poids de 4,4'-méthylènebis(phenyl isocyanate) et de 50% en poids de 2,4'-méthylènebis(phenyl isocyanate) (mélange aussi appelé MIPI). Le polyuréthane comparatif C a été préparé à partir des ingrédients indiqués dans le tableau 4 ci-dessous.

Le MIPI utilisé est le Lupranat^{®} MIPI disponible auprès de BASF ; il présente une proportion de fonctions NCO de l'ordre de 33,5% en poids.

**Tableau 4 : polyuréthanes 3 à 6 selon l'invention et polyuréthane comparatif C**

| | 3 | 4 | 5 | 6 | C |
|---|---|---|---|---|---|
| PPG triol ayant une masse molaire moyenne en nombre de 4000 g/mol - étape a | 13,700 | 13,900 | 13,400 | 13,800 | 13,700 |
| PPG diol ayant une masse molaire moyenne en nombre de 2000 g/mol - étape a | 68,467 | 69,667 | 66,967 | 69,067 | 68,467 |
| IPDI - étape a | 4,700 | | | | |
| TDI - étape a | | 3,900 | | | |
| Tolonate^{®} X FLO 100 - étape a | | | 7,500 | | |
| m-XDI- étape a | | | | 3,900 | |
| MIPI- étape a | | | | | 5,500 |
| Catalyseur (Borchi^{®} Kat VP 0244) - étape a | 0,003 | 0,003 | 0,003 | 0,003 | 0,003 |
| Xylène - étape a | 0,030 | 0,030 | 0,030 | 0,030 | 0,030 |
| 4,4'-MDI- étape b | 13,100 | 12,500 | 12,100 | 13,200 | 12,300 |

### Préparation de compositions de mastic

Des compositions de mastic A, B, C, 1 à 6 ont été formulées à partir des polyuréthanes A, B, C, 1 à 6 préparés précédemment.

Les compositions de mastic ont été obtenues par mélange des ingrédients suivants :
- 26,7% en poids d'un polyuréthane préparé précédemment,
- 12% en poids de plastifiant,
- 25% en poids de charge(s),
- 13,6% en poids de PVC,
- 5,9% en poids de xylène,
- 10,2% en poids de gel urée,
- 6,6% en poids d'autres additifs.

Les compositions de mastic ainsi formulées ont été caractérisées comme reporté dans les tableaux 5 et 5bis ci-dessous.

Le temps de formation de peau (« Skinning Time » en anglais) a été mesuré selon la norme ISO 291.

La réticulation après 24h (« cure 24h » en anglais) a été mesuré selon la norme ISO 291.

Le module Max a été mesuré selon la norme ISO 11600.

L'allongement à la rupture a été mesuré selon la norme NF ISO 37 (Mars 2012).

Le module 100% a été mesuré selon la norme ISO 11600.

**Tableau 5 : caractérisation des compositions de mastic A, B, 1 et 2**

| | Mastic A | Mastic 1 | Mastic B | Mastic 2 |
|---|---|---|---|---|
| Allongement à la rupture (%) | 858 | 1300 | 449 | 1471 |
| Module 100% (MPa) | 0,54 | 0,57 | 1 | 0,99 |
| Module Max (MPa) | 1,05 | 1,26 | 2,63 | 2,04 |
| Réticulation 24h | 3 | 3 | 4 | 3,5 |
| Temps de formation de peau (min) | 67 | 75 | 50 | 45 |

**Tableau 5bis : caractérisation des compositions de mastic C et 3 à 6**

| | Mastic C | Mastic 3 | Mastic 4 | Mastic 5 | Mastic 6 |
|---|---|---|---|---|---|
| Allongement à la rupture (%) | 469 | 1274 | 1540 | 1550 | 1512 |
| Module 100% (MPa) | 0,92 | 0,89 | 0,78 | 0,67 | 0,78 |
| Module Max (MPa) | 2,09 | 1,99 | 1,57 | 1,13 | 1,78 |
| Réticulation 24h | 5 | 3,5 | 3 | 3 | 3 |
| Temps de formation de peau (min) | 35 | 75 | 110 | 120 | 98 |

Les tableaux 5 et 5bis montrent que les compositions de mastic selon l'invention (composition de mastic 1 à 6) présentent de meilleures propriétés élastiques, en particulier un allongement à la rupture supérieur à 1200%. Au contraire, les compositions de mastic comparatives A, B et C présentent un allongement à la rupture inférieur à 900%.

## Revendications

1. Procédé de préparation de polyuréthanes à terminaisons NCO, ledit polyuréthane étant non solide à une température allant de 5 à 35°C et présentant une viscosité Brookfield mesurée à 23°C selon la norme ISO 2555 inférieure ou égale à 300000 mPa.s, ledit procédé comprenant successivement :
a) la réaction d'une composition de diisocyanate(s) avec une composition de polyol(s) avec un ratio molaire NCO/OH inférieur ou égal à 0,8 afin d'obtenir un polyuréthane précurseur à terminaisons OH ne comprenant pas de fonctions NCO terminales, ladite composition de diisocyanate(s) comprenant au moins 80% en poids par rapport au poids total de la composition de diisocyanate(s) d'un disocyanate choisi parmi le 4,4'-diisocyanate de diphénylméthylène (4,4'-MDI), l'IPDI, le diisocyanate de toluène (2,4-TDI), le méta-xylylène diisocyanate (m-XDI), l'allophanate dérivé du diisocyanate d'hexaméthylène de formule (I) ci-dessous : 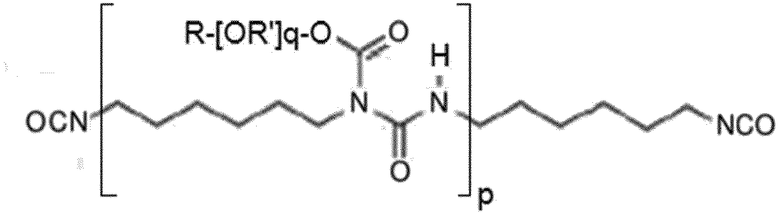 dans laquelle :
- p est un nombre entier allant de 1 à 2 ;
- q est un nombre entier allant de 0 à 9, et de préférence de 2 à 5 ;
- R représente une chaîne hydrocarbonée, saturée ou insaturée, cyclique ou acyclique, linéaire ou ramifiée, comprenant de 1 à 20 atomes de carbone, de préférence de 6 à 14 atomes de carbone ;
- R' représente un groupe divalent alkylène ayant de 2 à 4 atomes de carbone ; et de préférence, un groupe divalent propylène ;
et
b) la réaction dudit polyuréthane précurseur à terminaisons OH ainsi obtenu avec une composition de diisocyanate de diphénylméthylène dans un rapport molaire NCO/OH strictement supérieur à 1 afin d'obtenir des polyuréthanes à terminaisons NCO, ladite composition de diisocyanate de diphénylméthylène comprenant au moins 80% en poids d'un même composé diisocyanate de diphénylméthylène
les étapes a) et b) étant mises en oeuvre dans des conditions anhydres.

2. Procédé selon la revendication 1, dans lequel la composition de diisocyanate de diphénylméthylène utilisée à l'étape b) comprend au moins 85% en poids, de préférence encore au moins 90% en poids, avantageusement au moins 95% en poids, encore plus avantageusement au moins 98% en poids d'un même composé diisocyanate de diphénylméthylène, par rapport au poids total de la composition de diisocyanate de diphénylméthylène.

3. Procédé selon l'une des revendications 1 ou 2, dans lequel la composition de diisocyanate de diphénylméthylène utilisée à l'étape b) comprend au moins 80% en poids, de préférence au moins 85% en poids, de préférence encore au moins 90% en poids, avantageusement au moins 95% en poids, encore plus avantageusement au moins 98% en poids de 4,4'-diisocyanate de diphénylméthylène, par rapport au poids total de la composition de diisocyanate de diphénylméthylène.

4. Procédé selon l'une quelconque des revendications 1 à 3, dans lequel la composition de polyol est constituée d'un mélange de polyéther diol et de polyéther triol.

5. Procédé selon l'une quelconque des revendications 1 à 4, dans lequel le ratio molaire NCO/OH lors de l'étape b) est supérieur ou égal à 1,2, de préférence encore supérieur ou égal à 1,5, avantageusement supérieur ou égal à 1,7.

6. Procédé selon l'une quelconque des revendications 1 à 5, dans lequel les polyuréthanes à terminaisons NCO présentent un allongement à la rupture, mesuré selon la norme NF ISO 37 (Mars 2012), supérieur ou égal à 1000%.

7. Composition comprenant :
- au moins un polyuréthane susceptible d'être obtenu selon le procédé tel que défini dans l'une revendications 1 à 6,
- au moins une charge choisie parmi l'argile, le quartz, les charges carbonatées, et
- au moins un catalyseur de réticulation.

8. Composition selon la revendication 7, **caractérisée en ce que** la charge est une charge carbonatée choisie parmi les carbonates de métaux alcalins ou alcalino-terreux, et de préférence le carbonate de calcium.

9. Composition selon l'une des revendications 7 ou 8, comprenant :
- de 10 à 40% en poids, de préférence de 15 à 30% en poids de polyuréthane,
- de 20 à 70% en poids, de préférence de 25 à 60% en poids d'au moins une charge,
- de 0,01 à 1% en poids d'au moins un catalyseur de réticulation,
les pourcentages en poids étant exprimés par rapport au poids total de la composition.

10. Article comprenant la composition selon l'une des revendications 7 à 9 dans un conditionnement hermétique, à l'abri de l'air.

## Patentansprüche

1. Verfahren zur Herstellung von Polyurethanen mit NCO-Endgruppen, wobei das Polyurethan bei einer Temperatur im Bereich von 5 bis 35 °C nicht fest ist und eine bei 23 °C gemäß der ISO-Norm 2555 gemessene Brookfield-Viskosität kleiner oder gleich 300.000 mPa.s aufweist, wobei das Verfahren sukzessive Folgendes umfasst:
a) die Umsetzung einer Zusammensetzung von Diisocyanat(en) mit einer Zusammensetzung von Polyol(en) mit einem NCO/OH-Molverhältnis kleiner oder gleich 0,8 zum Erhalt einer Polyurethanvorstufe mit OH-Endgruppen und ohne endständige NCO-Funktionen, wobei die Zusammensetzung von Diisocyanat(en) mindestens 80 Gew.%, bezogen auf das Gesamtgewicht der Zusammensetzung von Diisocyanat(en), eines Diisocyanats umfasst, das ausgewählt ist aus 4,4'-Diphenylmethylendiisocyanat (4,4'-MDI), IPDI, Toluoldiisocyanat (2,4-TDI), meta-Xylylendiisocyanat (m-XDI) und dem von Hexamethylendiisocyanat abgeleiteten Allophanat der nachstehenden Formel (I): 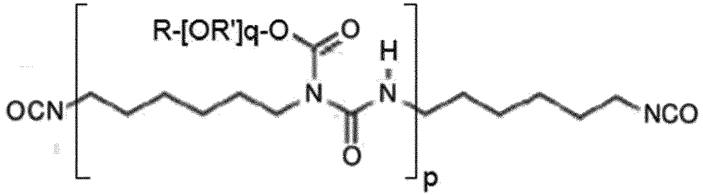 in der:
- p eine ganze Zahl im Bereich von 1 bis 2 ist;
- q eine ganze Zahl im Bereich von 0 bis 9 und vorzugsweise von 2 bis 5 ist;
- R für eine gesättigte oder ungesättigte, cyclische oder acyclische, lineare oder verzweigte Kohlenwasserstoffkette mit 1 bis 20 Kohlenstoffatomen, vorzugsweise 6 bis 14 Kohlenstoffatomen, steht;
- R' für eine zweiwertige Alkylengruppe mit 2 bis 4 Kohlenstoffatomen und vorzugsweise eine zweiwertige Propylengruppe steht;
und
b) die Umsetzung der so erhaltenen Polyurethanvorstufe mit OH-Endgruppen mit einer Diphenylmethylendiisocyanatzusammensetzung in einem NCO/OH-Molverhältnis streng größer als 1 zum Erhalt von Polyurethanen mit NCO-Endgruppen, wobei die Diphenylmethylendiisocyanatzusammensetzung mindestens 80 Gew.-% derselben Diphenylmethylendiisocyanatverbindung umfasst;
wobei die Schritte a) und b) unter wasserfreien Bedingungen durchgeführt werden.

2. Verfahren nach Anspruch 1, wobei die in Schritt b) verwendete Diphenylmethylendiisocyanatzusammensetzung mindestens 85 Gew.-%, weiter bevorzugt mindestens 90 Gew.-%, vorteilhafterweise mindestens 95 Gew.-%, noch vorteilhafter mindestens 98 Gew.-%, derselben Diphenylmethylendiisocyanatverbindung, bezogen auf das Gesamtgewicht der Diphenylmethylendiisocyanatzusammensetzung, umfasst.

3. Verfahren nach Anspruch 1 oder 2, wobei die in Schritt b) verwendete Diphenylmethylendiisocyanatzusammensetzung mindestens 80 Gew.-%, bevorzugt mindestens 85 Gew.-%, weiter bevorzugt mindestens 90 Gew.-%, vorteilhafterweise mindestens 95 Gew.-%, noch vorteilhafter mindestens 98 Gew.-%, 4,4'-Diphenylmethylendiisocyanat, bezogen auf das Gesamtgewicht der Diphenylmethylendiisocyanatzusammensetzung, umfasst.

4. Verfahren nach einem der Ansprüche 1 bis 3, wobei die Polyolzusammensetzung aus einem Gemisch von Polyetherdiol und Polyethertriol besteht.

5. Verfahren nach einem der Ansprüche 1 bis 4, wobei das NCO/OH-Molverhältnis in Schritt b) größer oder gleich 1,2, weiter bevorzugt größer oder gleich 1,5, vorteilhafterweise größer oder gleich 1,7, ist.

6. Verfahren nach einem der Ansprüche 1 bis 5, wobei die Polyurethane mit NCO-Endgruppen eine gemäß der Norm NF ISO 37 (März 2012) gemessene Reißdehnung größer oder gleich 1000 % aufweisen.

7. Zusammensetzung, umfassend:
- mindestens ein Polyurethan, das nach dem Verfahren gemäß einem der Ansprüche 1 bis 6 erhältlich ist,
- mindestens einen Füllstoff, der aus Ton, Quarz und Carbonat-Füllstoffen ausgewählt ist, und
- mindestens einen Vernetzungskatalysator.

8. Zusammensetzung nach Anspruch 7, **dadurch gekennzeichnet, dass** es sich bei dem Füllstoff um einen Carbonat-Füllstoff, der aus Alkali- oder Erdalkalimetallcarbonaten ausgewählt ist, und vorzugsweise Calciumcarbonat handelt.

9. Zusammensetzung nach Anspruch 7 oder 8, umfassend:
- 10 bis 40 Gew.-%, vorzugsweise 15 bis 30 Gew.-%, Polyurethan,
- 20 bis 70 Gew.-%, vorzugsweise 25 bis 60 Gew.-%, mindestens eines Wirkstoffs,
- 0,01 bis 1 Gew.-% mindestens eines Vernetzungskatalysators,
wobei sich die Gewichtsprozentangaben auf das Gesamtgewicht der Zusammensetzung beziehen.

10. Artikel, umfassend die Zusammensetzung nach einem der Ansprüche 7 bis 9 in einer luftdicht verschlossenen Packung.

## Claims

1. Process for preparing NCO-terminated polyurethanes, said polyurethane being non-solid at a temperature ranging from 5 to 35°C and having a Brookfield viscosity measured at 23°C according to standard ISO 2555 of less than or equal to 300 000 mPa.s, said process comprising, successively:
a) the reaction of a composition of diisocyanate(s) with a composition of polyol (s) with an NCO/OH molar ratio less than or equal to 0.8 in order to obtain an OH-terminated precursor polyurethane comprising no terminal NCO functions, said composition of diisocyanate(s) comprising at least 80% by weight, relative to the total weight of the composition of diisocyanate(s), of a diisocyanate selected from diphenylmethylene-4,4'-diisocyanate (4,4'-MDI), IPDI, toluene diisocyanate (2,4-TDI), meta-xylylene diisocyanate (m-XDI), the allophanate derived from hexamethylene diisocyanate of formula (I) below: 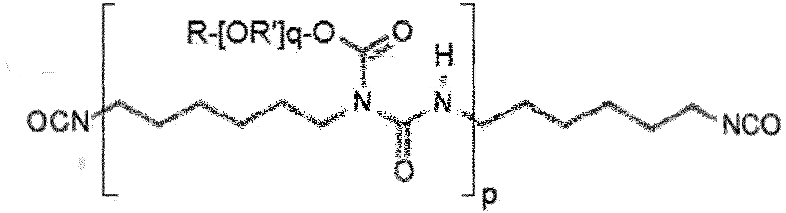 in which:
- p is an integer ranging from 1 to 2;
- q is an integer ranging from 0 to 9, and preferably from 2 to 5;
- R represents a saturated or unsaturated, cyclic or acyclic, linear or branched hydrocarbon-based chain comprising from 1 to 20 carbon atoms, preferably from 6 to 14 carbon atoms;
- R' represents a divalent alkylene group having from 2 to 4 carbon atoms; and preferably a divalent propylene group;
and
b) the reaction of said OH-terminated precursor polyurethane obtained in this way with a diphenylmethylene diisocyanate composition in an NCO/OH molar ratio strictly greater than 1 in order to obtain NCO-terminated polyurethanes, said diphenylmethylene diisocyanate composition comprising at least 80% by weight of the same diphenylmethylene diisocyanate compound,
steps a) and b) being carried out under anhydrous conditions.

2. Process according to Claim 1, in which the diphenylmethylene diisocyanate composition used in step b) comprises at least 85% by weight, more preferably still at least 90% by weight, advantageously at least 95% by weight, even more advantageously at least 98% by weight of the same diphenylmethylene diisocyanate compound, relative to the total weight of the diphenylmethylene diisocyanate composition.

3. Process according to either of Claims 1 and 2, in which the diphenylmethylene diisocyanate composition used in step b) comprises at least 80% by weight, preferably at least 85% by weight, more preferably still at least 90% by weight, advantageously at least 95% by weight, even more advantageously at least 98% by weight of diphenylmethylene-4,4'-diisocyanate, relative to the total weight of the diphenylmethylene diisocyanate composition.

4. Process according to any one of Claims 1 to 3, in which the polyol composition consists of a mixture of polyether diol and of polyether triol.

5. Process according to any one of Claims 1 to 4, in which the NCO/OH molar ratio during step b) is greater than or equal to 1.2, more preferably still greater than or equal to 1.5, advantageously greater than or equal to 1.7.

6. Process according to any one of Claims 1 to 5, in which the NCO-terminated polyurethanes have an elongation at break, measured according to standard NF ISO 37 (March 2012), of greater than or equal to 1000%.

7. Composition comprising:
- at least one polyurethane capable of being obtained according to the process as defined in one of Claims 1 to 6,
- at least one filler selected from clay, quartz or carbonate fillers, and
- at least one crosslinking catalyst.

8. Composition according to Claim 7, **characterized in that** the filler is a carbonate filler selected from alkali metal or alkaline-earth metal carbonates, and preferably calcium carbonate.

9. Composition according to either of Claims 7 and 8, comprising:
- from 10 to 40% by weight, preferably from 15 to 30% by weight, of polyurethane,
- from 20 to 70% by weight, preferably from 25 to 60% by weight, of at least one filler,
- from 0.01 to 1% by weight of at least one crosslinking catalyst,
the percentages by weight being expressed relative to the total weight of the composition.

10. Article comprising the composition according to one of Claims 7 to 9 in an airtight hermetic packaging.
